# EUROPEAN PATENT SPECIFICATION

(11) **EP 2 259 241 B1**
(45) Date of publication and mention of the grant of the patent: **08.01.2014**
(21) Application number: 08873580.8
(22) Date of filing: 25.11.2008
(51) Int. Cl.: G08B 25/04, G08B 17/00, G08B 23/00, G08B 25/10, G08B 29/18

(54) **ALARM UNIT AND ALARM SYSTEM**
ALARMEINHEIT UND ALARMSYSTEM
UNITÉ D'ALARME ET SYSTÈME D'ALARME

(30) Priority: 27.03.2008 JP 2008082724
(43) Date of publication of application: 08.12.2010
(73) Proprietor: HOCHIKI CORPORATION, Tokyo 141-8660 (JP)
(72) Inventor: EGAWA, Yoshitaka, Tokyo 141-8660 (JP)
(74) Representative: Kling, Simone
(86) International application number: PCT/JP2008/071338
(87) International publication number: WO 2009/118951

(56) References cited:
- EP-A1- 1 751 726
- WO-A1-00/22591
- JP-A- 2005 038 401
- JP-A- 2008 035 423
- JP-A- 2008 040 555
- JP-A- 2008 041 015
- US-A1- 2006 250 236
- US-B1- 6 747 557
- US-B1- 6 861 952

## Description

### TECHNICAL FIELD

The present invention relates to an alarm device and alarm system which detects an abnormal condition such as a fire and issues an alarm, and also wirelessly transmits a signal to other alarm devices to facilitate linked alarm output.

### BACKGROUND ART

Conventional alarm devices known as residential alarm devices comprise functionality for detecting an abnormal condition such as a fire or gas leak in a residence and issue an alarm by voice message or other means. In recent years, monitoring for abnormal conditions such as a fire has been performed on a room-by-room basis by installing a plurality of alarm devices throughout a single residence.

When a plurality of alarm devices are installed in a single residence in this manner, a person who is present in a different room from the room where the abnormal condition occurred may not hear the alarm sound, giving the fire or other problem a chance to spread. Therefore, a system is proposed in which the alarm devices are connected to each other using wires, and when a particular alarm device detects a fire, a signal is sent to the other alarm devices so that an audible alarm is emitted simultaneously, thereby realizing a linked alarm system (see Patent Document 1, for example).

However, because providing a hard-wired connection between each alarm requires the installation of wiring, a problem arises in terms of increased costs. This problem can be resolved by employing wireless alarm devices. Furthermore, because the ICs used in modern wireless circuits have very low power consumption, even when operating in a state of constant readiness to receive alarm signals from other alarm devices, battery life that is sufficient from a practical standpoint, for example five years or longer, is assured. Accordingly, wireless alarm devices are becoming increasingly practical.
Patent Document 1: Japanese Unexamined Patent Application, First Publication No. 2007-094719

WO 00/22591 A1 relates to a communicative environmental alarm system with voice indication.

US 6,747,557 B1 pertains to a system and method for signaling a weather alert condition to a residential environment.

US 6,861,952 B1 describes an apparatus and method for utilizing smoke alarms as nodes of a home network.

### DISCLOSURE OF INVENTION

### [Problems to be Solved by the Invention]

Incidentally, in residences where such a wireless alarm system is used, typically an intercom system is installed. However, if the room where the intercom master unit is installed is unoccupied, a problem occurs in that depending on where residents are located the intercom may not be heard.

Furthermore, the same applies to a telephone, in that depending on the location the sound of the telephone may not be heard.

An object of the present invention is to provide an alarm device and alarm system which utilizes the wireless communication functionality and message output functionality of alarm devices to enable events generated by other devices such as intercoms or telephones to be reliably heard in any locations.

### [Means for Solving the Problems]

To solve the problems above and achieve the objective, the present invention employs the following measures:

### (Alarm device)

That is, (1) the present invention is an alarm device according to claim 1.

The alarm device disclosed in (1) above may further comprise an operation device for setting the flag information in the memory table.

(2) The alarm device disclosed in (1) above may adopt a configuration in which: the another device includes one or more of an intercom, a burglar alarm receiver, a telephone, a clock, and a home appliance, and the device-specific event signal transmitted from a communication adapter provided in the another device is received and processed by the linked message processing section.

### (Alarm system)

Furthermore, (3) the present invention is an alarm system according to claim 3.

(10) The alarm system disclosed in (3) above may adopt a configuration in which: the another device other than the alarm devices includes one or more of an intercom, a burglar alarm receiver, a telephone, a clock, and a home appliance, and the device-specific event signal transmitted from a communication adapter provided in the another device is received and processed by the linked message processing section.

### [Effects of the Invention]

According to the present invention, when for example the call button of an intercom is pressed, an event signal indicating that "the intercom call button was pressed" is transmitted wirelessly from the communication adapter provided in the intercom master unit. Whereupon, the wirelessly transmitted event signal is received by the alarm devices installed in each room, the memory table is referenced according to the event code included in the received event signal, the message information for when the call button of the intercom is pressed is retrieved, and a chime followed by the message "A guest has arrived", for example, is output. Accordingly, even in locations where no intercom master unit is installed, the linked message is output from the alarm devices, enabling the user to reliably ascertain that the intercom call button has been pressed, and receive the visitor.

By installing communication adapters in appropriate devices used in a residential context such as telephones, devices which output emergency earthquake bulletins, and alarm clocks, messages for events unique to each of those devices can be output by the alarm devices. Accordingly, the use of such an alarm system can create a more comfortable and convenient living environment in a residence or similar, and by the use of a wireless network enables an environment for disseminating information to be built at lower cost.

Furthermore, in a room where the output of linked messages based on event signals from other devices such as an intercom or telephone is not desired, the linkage flag information for the alarm device in that room should set to disallow linkage. By using such a setting, the linked output of messages associated with events from the another device other than the alarm device, such as an intercom takes place selectively from the alarm device installed in a room where such linkage is required.

### BRIEF DESCRIPTION OF THE DRAWINGS

FIG. 1 is an explanatory drawing showing an alarm system according to an embodiment of the present invention, which is installed in a residence and links with other devices.
FIG. 2A is a front view of the outward appearance of an alarm device according to the same embodiment.
FIG. 2B is a side view of the outward appearance of the same alarm device.
FIG. 3 is a block diagram of the same alarm device.
FIG. 4 is an explanatory drawing showing the format of the event signal used in the same embodiment.
FIG. 5 is an explanatory drawing showing a memory table provided in the alarm device of the same embodiment.
FIG. 6 is a block diagram showing a communication adapter provided in a device other than the alarm device.
FIG. 7 is a flowchart showing the basic processing in the same embodiment.
FIG. 8 is a flowchart showing the fire monitoring processing subroutine in step S2 of FIG. 7.
FIG. 9 is a flowchart showing the linked message processing subroutine in step S3 of FIG. 7.

### [Brief Description of the Reference Symbols]

- 10, 10-1 to 10-5: Alarm device
- 12: Cover
- 14: Main unit
- 15: Mounting hook
- 16: Smoke detector section
- 18: Sound hole
- 20: Alarm stop switch
- 22: LED
- 23: Residence
- 24: Garage
- 25: Intercom slave unit
- 26: Intercom master unit
- 28: Person sensor
- 30: Security receiver
- 32: Telephone
- 34: Emergency earthquake bulletin receiver
- 35: Alarm clock
- 36, 36-1 to 36-5: Communication adapter
- 38: CPU
- 40, 78: Wireless circuit section
- 41, 79: Antenna
- 42: Storage circuit section
- 44: Sensor section
- 46: Alert section
- 48: Operation section
- 50, 80: Battery power supply
- 52: Transmission circuit

- 54: Reception circuit
- 56, 76: Memory
- 58: Event code
- 60: Transmission source code
- 62: Group code
- 64: Event code
- 66: Memory table
- 68: Speaker
- 70: Abnormal condition monitoring section
- 72: Linked message management section
- 74: Linked message processing section
- 75: Communication control section

### BEST MODE FOR CARRYING OUT THE INVENTION

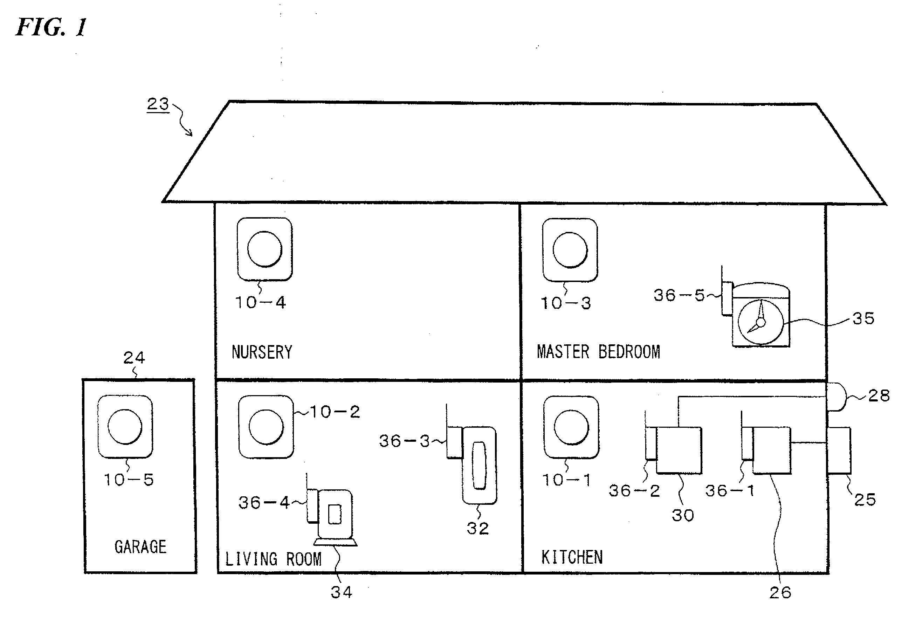

FIG. 1 is an explanatory drawing showing an alarm system of the present embodiment which links with other devices installed in a residence. In the example in FIG. 1, alarm devices 10-1 to 10-4 of the present embodiment are installed in the kitchen, living room, master bedroom, and nursery of a residence 23 respectively, and an alarm device 10-5 is also installed in an external garage 24.

Each of the alarm devices 10-1 to 10-5 comprises functionality for exchanging event signals with each other by wireless transmission and reception, and the five alarm devices 10-1 to 10-5 form a single linked group to monitor for fires throughout the entire residence.

Furthermore, in the residence 23, as other devices other than the alarm devices, an intercom system comprising an intercom slave unit 25 and an intercom master unit 26, a telephone 32, an emergency earthquake bulletin receiver 34, and an alarm clock 35 are installed, and on each device are provided communication adapters 36-1 to 36-5 which transmit device-specific event signals to the alarm devices 10-1 to 10-5.

The communication adapter 36-1, when the intercom master unit 26 receives a call signal from the intercom slave unit 25 installed in a foyer or the like, wirelessly transmits an event signal indicating the intercom call to the alarm devices 10-1 to 10-5.

The communication adapter 36-2, when the security receiver 30 is in "at home" mode and disarmed, upon receiving a detection signal from a person sensor 28 installed in a foyer or the like, wirelessly transmits an event signal indicating a visitor to the alarm devices 10-1 to 10-5.

The communication adapter 36-3, when the telephone 32 is called, wirelessly transmits an event signal indicating the telephone call to the alarm devices 10-1 to 10-5.

The communication adapter 36-4, when the emergency earthquake bulletin receiver 34 receives an emergency earthquake bulletin, wirelessly transmits an event signal indicating reception of the emergency earthquake bulletin to the alarm devices 10-1 to 10-5. The emergency earthquake bulletin receiver 34 receives emergency earthquake bulletins distributed by the Meteorological Agency, and prior to a large earthquake occurring, reports the expected magnitude and estimated arrival time.

The communication adapter 36-5, when the alarm clock 35 reaches a set time, wirelessly transmits an event signal for the alarm clock 35 to the alarm devices 10-1 to 10-5, causing output of a message inducing a resident to wake up.

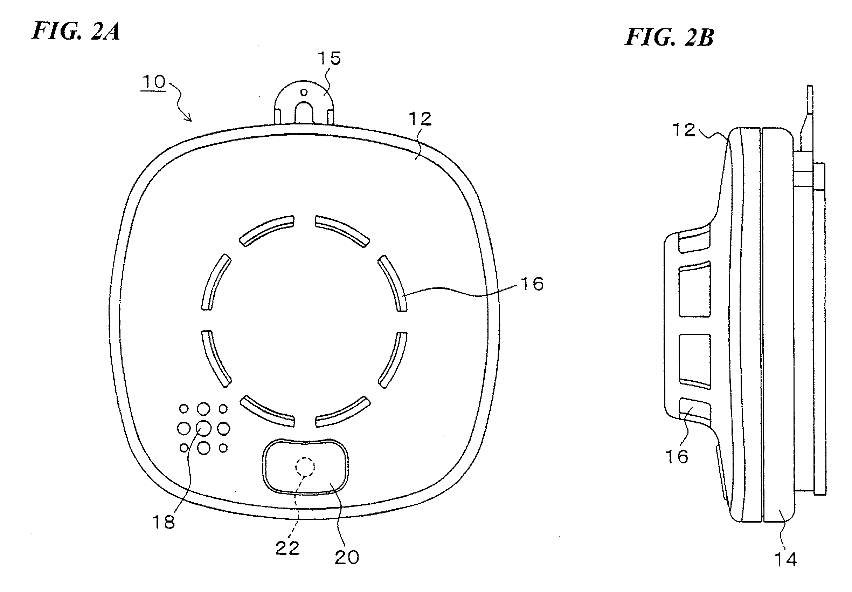

FIG. 2A and FIG. 2B are explanatory drawings showing the outward appearance of a wireless alarm device according to the present embodiment, wherein FIG. 2A shows a front view, and FIG. 2B shows a side view.

As shown in FIG. 2A and FIG. 2B, an alarm device 10 of the present embodiment comprises a cover 12 and a main unit 14. At the center of the cover 12, a smoke detector section 16 with openings through which smoke can enter formed around the periphery, is disposed, which detects a fire when smoke from the fire reaches a predetermined concentration.

A sound hole 18 is provided at the lower left side of the smoke detector section 16 provided on the cover 12, and a speaker is housed behind this sound hole 18 such that an audible alarm or voice message can be output. Underneath the smoke detector section 16, an alarm stop switch 20 is provided. The alarm stop switch 20 also functions as a test switch.

Inside the alarm stop switch 20, an LED 22 is installed as illustrated by the dashed line. When the LED 22 is lit, the lit status of the LED 22 can be recognized from outside through the switch cover of the alarm stop switch 20.

Furthermore, a mounting hook 15 is provided at the top of the back side of the main unit 14, and by screwing a screw or the like into a wall of the room where the alarm device 10 is to be installed, and fitting the mounting hook 15 over this screw, the alarm device 10 can be mounted to the wall surface.

Although with the alarm device 10 shown in FIG. 2A and FIG. 2B, an example of an alarm device comprising a smoke detector section 16 which detects smoke from a fire is used, alarm devices that comprise a thermistor to detect the heat of a fire, or alarm devices that instead of fire detect gas leaks, are also within the scope of the present invention.

In FIG. 1, if a fire is detected in a nursery of the residence 23, the alarm device 10-4 detects the fire and starts a warning process. Detecting a fire and starting a warning process is called "alert activation" in an alarm device. When the alarm device 10-4 undergoes alert activation, the alarm device 10-4 functions as the linkage source, and to the other alarm devices 10-1 to 10-3 and 10-5 serving as the linkage destinations, wirelessly transmits an event signal indicating the fire alert. The other alarm devices 10-1 to 10-3 and 10-5, upon receiving the event signal indicating the fire alert from the alarm device 10-4 serving as the linkage source, perform alert activation behavior as a linkage destination.

Here, as the audible alarm of the alarm device 10-4 serving as the linkage source, for example a siren followed by a voice message "The fire alarm has activated. Please verify." may be output continuously. On the other hand, the linkage destination alarm devices 10-1 to 10-3 and 10-5 continuously output a siren followed by a voice message "The fire alarm in another room has activated. Please verify."

In a state where the alarm devices 10-1 to 10-5 are outputting an audible alarm, if the alarm stop switch 20 provided on the alarm device shown in FIG. 2A and FIG. 2B is operated, processing to stop the audible alarm takes place.

Furthermore, the alarm devices 10-1 to 10-5 comprise failure monitoring functionality, and when a failure such as a low battery is detected, a warning sound, for example a beep, is output intermittently at for example one minute intervals to report that a failure has occurred. Moreover, the failure source alarm device where the failure is detected, wirelessly transmits an event signal indicating the failure to the other alarm devices, and in the other alarm devices, the same failure warning is output. As a result, when a failure is detected in any of the alarm devices, a failure warning is output from all of the alarm devices that constitute the group.

In addition to such linked alarm output of an abnormal condition such as fire in the alarm devices 10-1 to 10-5, for example, when a visitor operates a button of the intercom slave unit 25, causing a call sound in the form of a chime to be output from the intercom master unit 26, in the alarm system of the present embodiment, additionally, the communication adapter 36-1 provided in the intercom master unit 26 detects the call operation of the intercom master unit 26, and wirelessly transmits an event signal indicating the intercom call to the alarm devices 10-1 to 10-5.

Consequently, a chime followed by the message "A guest has arrived", for example, is output by each of the alarm devices 10-1 to 10-5, and even in rooms without an intercom master unit 26, arrival of a visitor can be reliably ascertained.

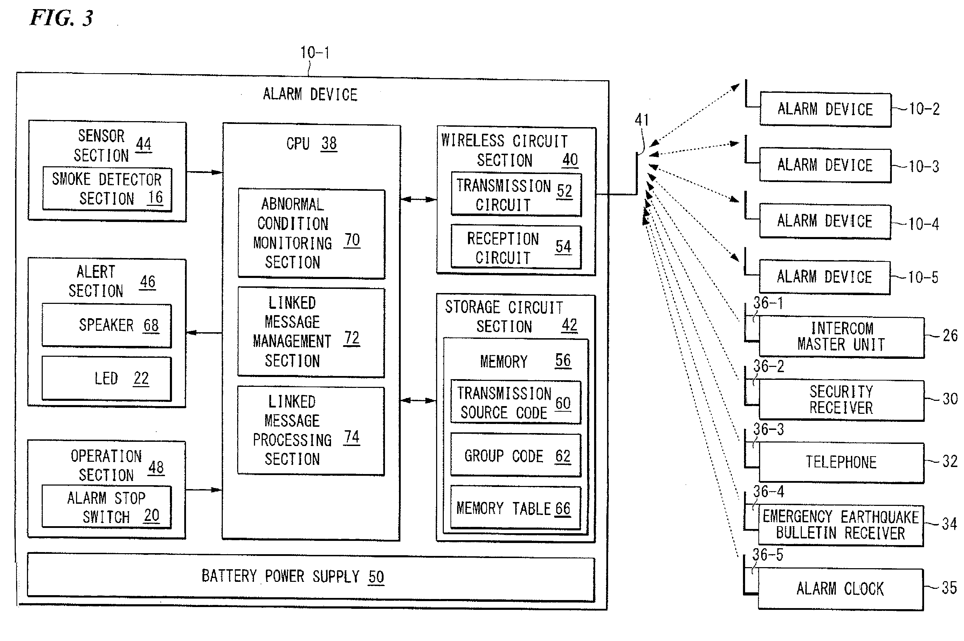

FIG. 3 is a block diagram showing an embodiment of the alarm device according to the present invention. Of the five alarm devices 10-1 to 10-5 shown in FIG. 1, FIG. 3 shows in detail the circuit structure of the alarm device 10-1.

The alarm device 10-1 comprises a CPU 38, and in communication with the CPU 38 are provided a wireless circuit section 40 comprising an antenna 41, a storage circuit section 42, a sensor section 44, an alert section 46, and an operation section 48. The alarm device 10-1 also comprises a battery power supply 50.

In the wireless circuit section 40, a transmission circuit 52 and a reception circuit 54 are provided, enabling the wireless transmission and reception of event signals to and from the other alarm devices 10-2 to 10-5. As the wireless circuit section 40, within Japan for instance, preferably a configuration is employed that conforms with STD-30 (a standard for wireless communication equipment in wireless stations for low power security systems) or STD-T67 (a standard for telemeters, telecontrol, and data transmission radio equipment for specified low power radio stations) which are known standards for specified low power radio stations in the 400 MHz band.

Naturally, as the wireless circuit section 40, in locations other than Japan, this can have contents that conform to the standards for allocated wireless base stations in that region.

In the storage circuit section 42, a memory 56 is provided. In the memory 56 are stored a transmission source code 60 which serves as an ID for identifying the alarm device, a group code 62 by which a plurality of alarm devices are grouped to perform linked alarm output, and a memory table 66.

As the transmission source code 60, based on the estimated number of alarm devices to be supplied throughout the country, a 32 bit code is used, for example, to ensure that the same code is not used more than once.

The group code 62 is assigned in common to a plurality of alarm devices which form a linked group, and when an event code received from another alarm device by the wireless circuit section 40 contains a group code that matches the group code 62 recorded in the memory 56, this event signal is received and processed as a valid signal.

In the present embodiment, the memory 56 is used in the storage circuit section 42, but by providing a DIP switch (not shown) instead of the memory 56, the transmission source code 60 and the group code 62 can be set by this DIP switch. When the transmission source code 60 and the group code 62 have a short code length (bit count), employing a storage circuit section 42 with DIP switches is desired.

In the memory table 66, for the alarm devices 10-1 to 10-5 and the other devices such as the intercom master unit 26, the security receiver 30, the telephone 32, the emergency earthquake bulletin receiver 34, and the alarm clock 35 in which the communication adapters 36-1 to 36-5 are provided, event codes and messages detailing events specific to each device are stored in advance.

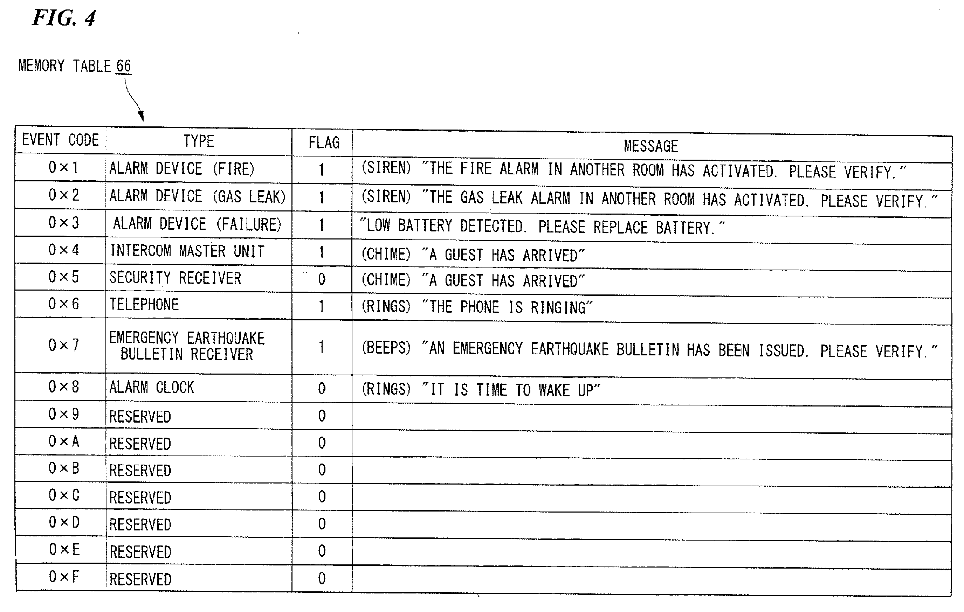

FIG. 4 shows in detail the memory table 66, in which are stored event codes, event contents, flags, and messages. The event code is a unique value representing an event which occurs in an alarm device or other device. In this example, event codes consist of 8 data bits, and in FIG. 4, values are specified using the hexadecimal notation 0x and range from 1 to F.

In other words, as the event codes of the alarm device 10, "0x1" is defined as a fire, "0x2" as a gas leak, "0x3" as a fault, "0x4" as the intercom, "0x5" as the security receiver, "0x6" as the telephone, 0x7" as an emergency earthquake bulletin, and "0x8" as the alarm clock, with the remainder kept in reserve.

A flag is "1 (on)" when set and "0 (off)" when reset. If set (1), message output is performed when an event signal is received from another device, and if reset (0), message output is inhibited. Therefore, by setting or resetting the flags in alarm devices from which linked message output is desired, the output of linked messages can be performed selectively. As the message, speech describing the contents of the event is recorded in advance.

The setting of flags in the memory table 66 may involve setting the flags in the memory 56 at the factory, or providing a flag setting switch on the alarm device 10 so that users can set the flags in the memory 56 themselves.

Returning to FIG. 3, in the present embodiment a smoke detector section 16 which detects smoke is provided in the sensor section 44. Alternatively, instead of a smoke detector section 16, a thermistor which detects the heat from a fire may be provided in the sensor section 44. In the case of an alarm device that monitors for gas leaks, the sensor section 44 may comprise a gas leak sensor.

In the alert section 46, a speaker 68 and an LED 22 are provided. The speaker 68 outputs a voice message or audible alarm from a voice synthesizer circuit section (not shown). The LED 22, by blinking, flashing, illuminating, or similar, indicates a failure or an abnormal condition such as a fire.

In the operation section 48, an alarm stop switch 20 is provided. The alarm stop switch 20 functions as a test switch when operated during monitoring, and if the alarm device 10-1 is normal, a siren followed by the voice message "The fire alarm has activated. Please verify." is output once, at a lower volume than a fire alarm. By operating the alarm stop switch 20 during an alarm for a fire or the like, the audible alarm being emitted from the alarm device 10-1 can be stopped.

As the battery power supply 50, for example an alkaline battery with a predetermined number of cells is used, and as for battery capacity a battery life of approximately 10 years is ensured by reducing the power consumption of the overall circuitry in the alarm device 10-1 including the wireless circuit section 30.

In the CPU 38, as functionality realized by program execution, an abnormal condition monitoring section 70, a linked message management section 72, and a linked message processing section 74 are provided.

The abnormal condition monitoring section 70, when a fire (smoke) is detected by the smoke detector section 16 provided in the sensor section 44, repeatedly outputs an audible alarm indicating a linkage source, for example a siren followed by a voice message "The fire alarm has activated. Please verify.", from the speaker 68 of the alert section 46, and transmits an event signal announcing a fire to the other alarm devices 10-2 to 10-5 from the antenna 41 by way of the transmission circuit 52 of the wireless circuit section 40.

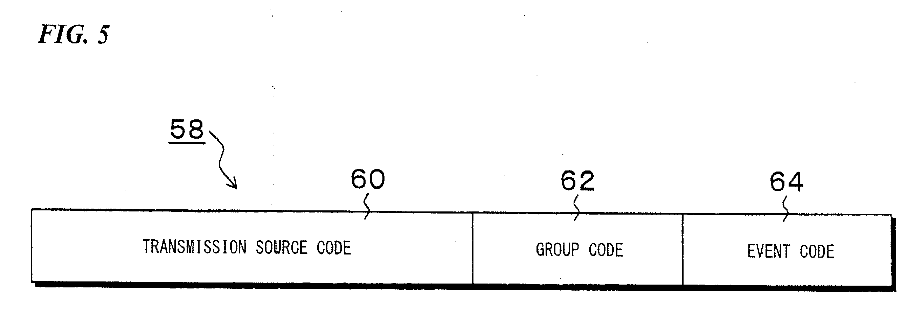

Here, the event signal 58 adopts the format shown in FIG. 5. As shown in FIG. 5, the event signal 58 comprises a transmission source code 60, a group code 62, and an event code 64. The transmission source code 60 is for example a 32 bit code. Furthermore, the group code 62 is for example an 8 bit code, and the same group code is assigned to devices in the same group, for example the alarm devices 10-1 to 10-5 in FIG. 3 and the communication adapters 36-1 to 36-5.

As the group code 62, as an alternative to setting the same group code for the alarm devices in a given group, a group code which is determined by a calculation between a predetermined reference code common to the alarm devices which form a group and a unique transmission source code 60 specific to each alarm device may be set.

The event codes 64 are the same as those shown in the memory table 66 of FIG. 4, representing the nature of the event such as a fire, gas leak, or other abnormal condition, or a failure. In the present embodiment, an 8 bit code is used.

Returning to FIG. 3, the linked message management section 72, in the memory table 66 shown in FIG. 4, for each event code 64 associated with the alarm devices and other devices which constitute a linked alarm group, records and manages the event contents, flag, and message.

The linked message processing section 74 retrieves from the memory table 66 the message information corresponding to the event code 64 included in the received signal, and performs audio output thereof. At this time, if the flag in the memory table is set to "1", linked output of the message is performed. On the other hand, if the flag is set to "0", linked output of the message is not performed.

Here, when the abnormal condition monitoring section 70 detects a fire alert and outputs the linkage source alarm, the LED 22 of the alert section 46 flashes, for example. On the other hand, when the linkage destination alarm is output, the LED 22 of the alert section 46 blinks, for example. As a result, the appearance of the LED 22 during a linkage source alarm and a linkage destination alarm can be distinguished. Naturally, the same flashing or blinking behavior can be used by the LED 22 for alarms issued by the linkage source and the linkage destination.

Furthermore, when the abnormal condition monitoring section 70 detects a low battery failure due to a drop in the voltage of the battery power supply 50, a failure alarm is output by outputting a low battery alarm in the form of a short beep at one minute intervals, for example. In this case, an event signal 58 indicating the failure is transmitted to the other alarm devices 10-2 to 10-5, thereby enabling linked output of the low battery alarm.

When outputting messages in response to an event signal 58 received from the other devices other than the alarm devices, flashing or blinking of the LED 22 may be performed as required.

The circuit structure and functionality of this alarm device 10-1 also applies to the other alarm devices 10-2 to 10-5, but the transmission source code 60 stored in the memory 56 is unique to each alarm device.

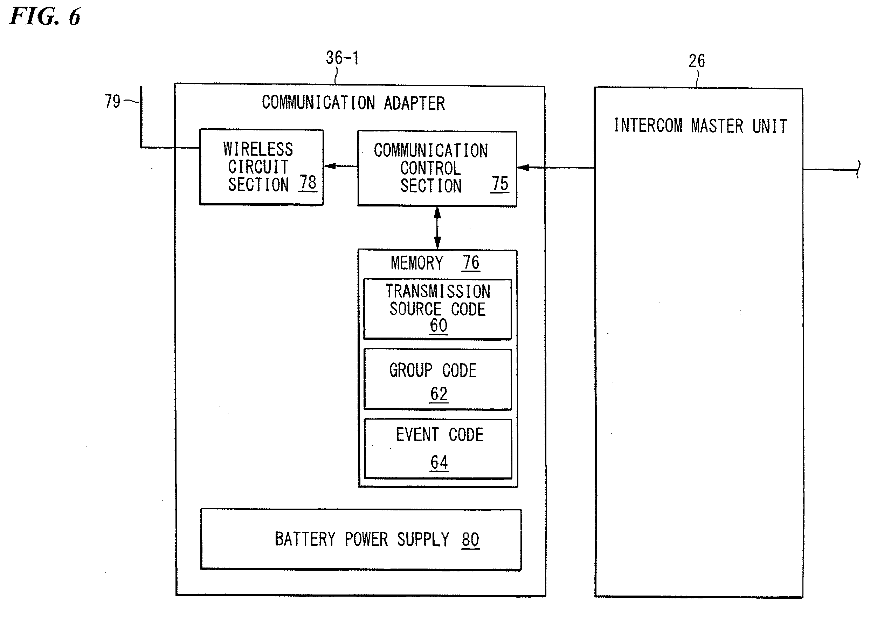

FIG. 6 is a block diagram showing a communication adapter provided on the other devices other than the alarm devices, using an example of a communication adapter provided on an intercom master unit.

In FIG. 6, the communication adapter 36-1 provided on the intercom master unit 26 comprises a communication control section 75, a memory 76, a wireless circuit section 79, an antenna 79, and a battery power supply 80. In the memory 76 are stored a transmission source code 60 which serves as an ID for identifying the communication adapter 36-1, a group code 62 by which the plurality of alarm devices 10-1 to 10-5 as shown in FIG. 1 and the communication adapters 36-1 to 36-5 are grouped to perform linked alarm output, and an event code 64 unique to the intercom master unit 26. In this case, the event code 64 unique to the intercom master unit 26 is "0x4" as shown in the memory table 66 of FIG. 4.

The communication control section 75 detects a call, which is an event associated with the intercom master unit 26, and generates an event signal 58 specific to the intercom master unit 26. The event signal 58 generated by the communication control section 75 has the same format as FIG. 5, and comprises the transmission source code 60, the group code 62, and the event code 64. The wireless circuit section 78 wirelessly transmits the event signal 58 generated by the communication control section 75 to the alarm devices 10-1 to 10-5.

The wireless circuit section 78 has the same structure as the wireless circuit section 40 in FIG. 3. The battery power supply 80, rather than housing an internal battery, may be supplied power from the intercom master unit 26.

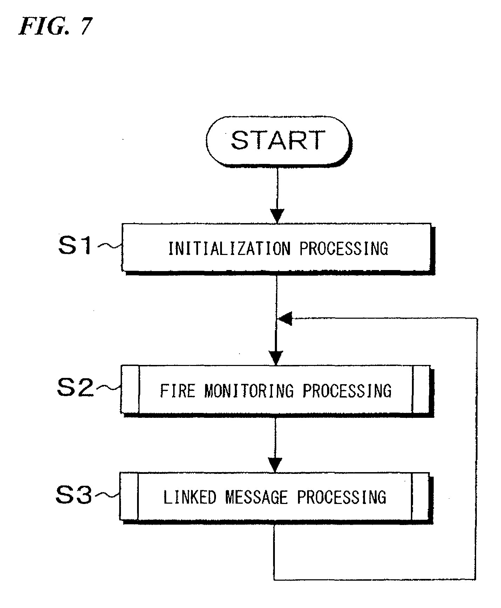

FIG. 7 is a flowchart showing the basic processing in the present embodiment. In FIG. 7, when the power is switched on by activating the battery power supply 50 housed in the alarm device 10, initialization processing is performed in step S1. This initialization processing includes grouping processing for forming a group from the alarm devices 10-1 to 10-5 shown in FIG. 3 and the communication adapters 36-1 to 36-5 provided in the other devices, and in the memory 56 of the alarm devices 10-1 to 10-5 and the memory 76 of the communication adapters 36-1 to 36-5, for example, which constitute the group, the same group code 62 is set. Grouping may be performed at the factory, or by the user.

Next, on a repeated basis, fire monitoring processing is executed in step S2, and then linked message processing is executed in step S3.

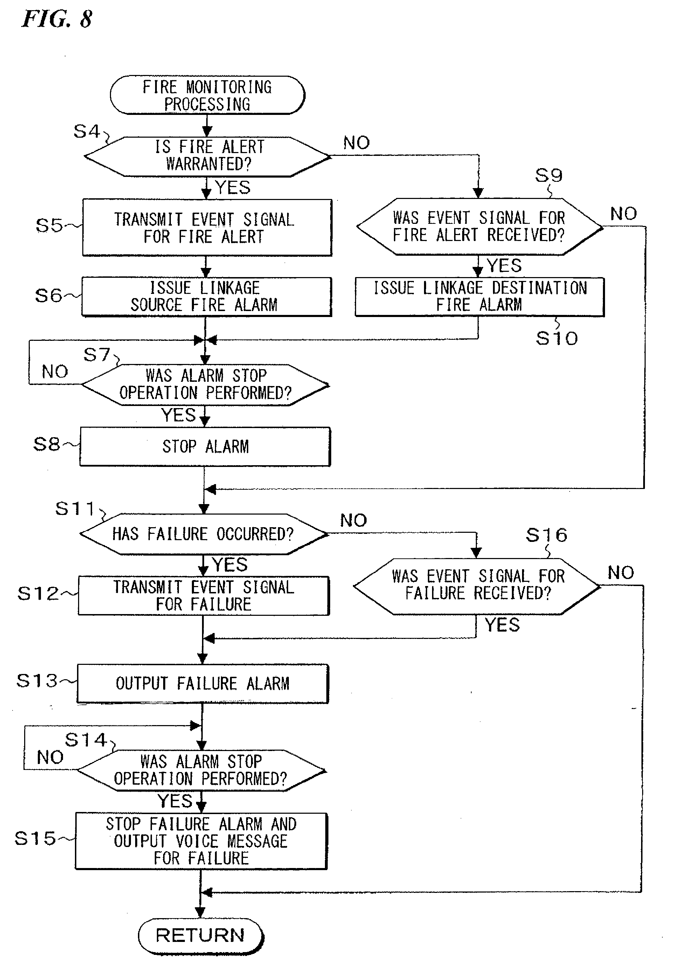

FIG. 8 is a flowchart showing the fire monitoring processing subroutine in step S2 of FIG. 7. In FIG. 8, first in step S4 a judgment is made by the smoke detector section 16 provided in the sensor section 44 as to whether or not a fire alert is warranted. If a judgment is made that a fire alert is warranted, the flow advances to step S5, and an event signal 58 for the fire alert is transmitted to the other alarm devices. Then, in step S6 a siren followed by a voice message "The fire alarm has activated. Please verify." is output continuously as a linkage source fire alarm, and the LED 22 begins to flash.

If a judgment is made in step S7 that the alarm stop switch 20 was operated during output of the fire alarm, the flow advances to step S8 and the alarm is stopped. If the alarm is stopped but smoke remains in the smoke detector section 16, alarm output is performed again after a predetermined time, for example 14 minutes.

On the other hand, if a fire alert is not judged to be warranted in step S4, the flow advances to step S9, where a judgment is made as to whether or not an event signal 58 indicating a fire alert has been received from another alarm device. If such an event signal 58 has been received, the flow advances to step S10 and a siren followed by a voice message "Another alarm device has activated. Please verify." is output continuously as a linkage destination fire alarm. In this case also, the linkage destination alarm is stopped if an alarm stop operation is identified in step S7.

Furthermore, if in step S11 a low battery fault or the like is detected, the flow advances to step S12, and an event signal 58 indicating the low battery fault is transmitted to the other alarm devices. Then, in step S 13 an audible alarm in the form of a short beep at one minute intervals, for example, is output.

If a judgment is made in step S 14 that the alarm stop switch 20 was operated during output of the fault alarm, the flow advances to step S15 where the voice message "Low battery detected. Please replace battery." is output and the fault alarm is stopped.

As the voice message for the fault in step S 15, when the event signal 58 indicating the fault is received from another alarm device, a modified message may be used such as "Low battery detected in another alarm device. Please verify."

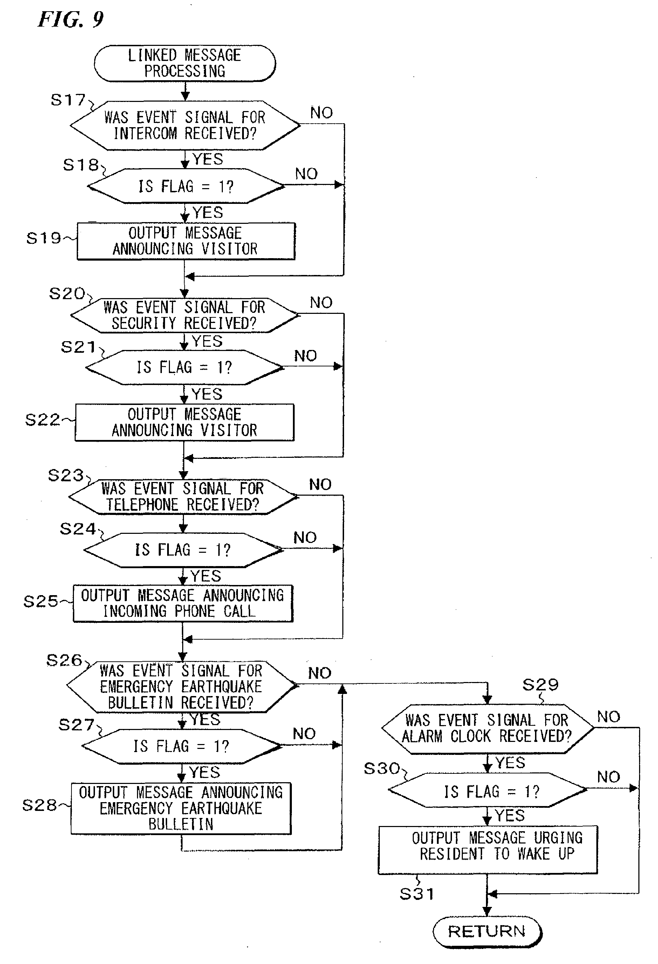

FIG. 9 is a flowchart showing the linked message processing subroutine in step S3 of FIG. 7. In FIG. 9, first if a judgment is made in step S17 that the event signal 58 contains the event code "0x4" and is associated with the intercom master unit 26, the flow advances to step S18. If the flag in the memory table 66 shown in FIG. 4 is set to "1", the flow advances to step S19 and a chime followed by the message "a visitor has arrived" is output to announce a visitor.

Furthermore, if a judgment is made in step S20 that the event signal 58 contains the event code "0x5" and is associated with the security receiver 30 in "at home mode", the flow advances to step S21. If the flag in the memory table 66 shown in FIG. 4 is set to "1", the flow advances to step S22 and a chime followed by the message "a visitor has arrived" is output to announce a visitor.

Because the visitor announcement associated with the event signal 58 from the security receiver 30 occurs in response to automatic detection of the visitor by the person sensor 28 installed in the foyer, this announcement takes place prior to the visitor announcement associated with the event signal 58 received from the intercom master unit 26. Therefore, the two visitor announcements associated with the event signals from both the intercom master unit 26 and the security receiver 30 can be used in a redundant manner. Naturally, by setting one flag and resetting the other, the visitor announcement can be restricted to one or the other.

Furthermore, if a judgment is made in step S23 that the event signal 58 contains the event code "0x6" and is associated with the telephone 32, the flow advances to step S24. If the flag in the memory table 66 shown in FIG. 4 is set to "1", the flow advances to step S25 and a ringing sound followed by the message "The phone is ringing" is output to report an incoming phone call.

Moreover, if a judgment is made in step S26 that the event signal 58 contains the event code "0x7" and is associated with the emergency earthquake bulletin receiver 34, the flow advances to step S27. If the flag in the memory table 66 shown in FIG. 4 is set to "1", the flow advances to step S28 and a beeping sound followed by the message "An emergency earthquake bulletin has been issued. Please verify." is output to announce the emergency earthquake bulletin. In this case, the resident can proceed to the location where the emergency earthquake bulletin receiver 34 is installed and prepare for the imminent earthquake based on the expected magnitude and estimated arrival time.

In addition, if a judgment is made in step S29 that the event signal 58 contains the event code "0x8" and is associated with the alarm clock 35, the flow advances to step S30. If the flag in the memory table 66 shown in FIG. 4 is set to "1", the flow advances to step S31 and a ringing sound followed by the message "It is time to wake up" is output to induce an occupant to wake up.

Moreover, in the embodiment above, an example of an alarm device 10 intended to detect fires is used, but the present invention can be applied without modification to alarm devices that detect other abnormal conditions, such as gas leak alarms and burglar alarms.

Furthermore, the devices other than the alarm devices, which output linked messages are not limited only to those described in the embodiment above. Any suitable device used in a residential context which requires events to be announced via messages, for example home appliances such as televisions, microwaves, washing machines, and refrigerators, by the provision of a communication adapter as above, can transmit a unique event signal 58 when an event occurs so as to achieve linked message output by means of alarm devices 10.

Moreover, the embodiment described above uses an example where the sensor section and alarm output processing section are integrated with the alarm device, but as another embodiment an alarm device in which the sensor section and the alarm output processing section are provided as separate units from the alarm device can also be used.

### INDUSTRIAL APPLICABILITY

The alarm device and alarm system according to the present invention is of particular utility in an alarm device and alarm system which detect and warn of abnormal conditions such as fire, and perform alarm output in a linked manner by wirelessly transmitting signals to other alarm devices.

## Claims

1. An alarm device (10-1) comprising:
a wireless circuit section (40) which wirelessly exchanges event signals (58) with another alarm device (10-2) and receives event signals (58) from another device (26) other than the alarm devices;
an alert section (46) which outputs an abnormal condition alarm;
an operation section (48) which tests for the alarm device or stops the abnormal condition alarm;
an abnormal condition monitoring section (70) which, upon receiving an abnormal condition detection signal from a sensor section (44) which detects an abnormal condition, outputs said abnormal condition alarm as a linkage source and transmits said event signal indicating an abnormal condition to said another alarm device (10-2), and upon receiving said event signal indicating an abnormal condition from said another alarm device (10-2), outputs said abnormal condition alarm as a linkage destination;
said event signal (58) includes a transmission source code (60) unique to a transmission source device, a group code (62) indicating association to a linked group, and an event code (64) indicating event contents;
a linked message management section (72) which registers and manages, in a memory Table (66), message information associated with said alarm device (10-1) and with another alarm device (10-2), message information associated with said another device (26) other than the alarm devices, and flag information which sets for each of said message information whether or not audio output is to be performed, said memory table (66) being referenced according to said event code (64); and
a linked message processing section (74) which, upon receiving said event signal (58) from said another device (26) other than the alarm devices, is adapted to reference said memory table (66) based on said event code included in said event signal, and if said flag information is set to enable audio output, to retrieve said associated message information from said memory table (66) and to perform audio output thereof.

2. The alarm device (10-1) according to claim 1, wherein
said another device includes one or more of an intercom (26), a burglar alarm receiver (30), a telephone (32), a clock (35), and a home appliance, and said device-specific event signal (58) transmitted from a communication adapter (36) provided in said another device is received and processed by said linked message processing section (74).

3. An alarm system comprising:
a plurality of alarm devices (10) according to any one of the previous claims which upon detecting an abnormal condition transmit an event signal (58) indicating the abnormal condition to another alarm device to perform linked alarm output; and
a communication adapter (36) provided on an another device (26) other than the alarm devices, which transmits an event signal (58) unique to said another device, wherein said communication adapter (36) comprises:
a communication control section (75) which detects event activity in said another device (26) and generates the device-specific event signal (58); and
a wireless circuit section (78) which exchanges said event signal (58) with said alarm device (10).

4. The alarm system according to claim 3, wherein
said another device other than the alarm devices includes one or more of an intercom (26), a burglar alarm receiver (30), a telephone (32), a clock (35), and a home appliance, and said device-specific event signal (58) transmitted from the communication adapter (36) provided in said another device (26) is received and processed by said linked message processing section (74).

## Patentansprüche

1. Alarmvorrichtung (10-1), umfassend:
einen drahtlosen Schaltungsabschnitt (40), der drahtlos Ereignissignale (58) mit einer anderen Alarmvorrichtung (10-2) austauscht und Ereignissignale (58) von einer anderen Vorrichtung (26) empfängt, die von den Alarmvorrichtungen verschieden ist,
einen Wamabschnitt (46), der einen Alarm eines ungewöhnlichen Zustands ausgibt,
einen Betriebsabschnitt (48), der die Alarmvorrichtung testet oder den Alarm des ungewöhnlichen Zustands stoppt;
einen Abschnitt zur Überwachung des ungewöhnlichen Zustands (70), der, beim Empfang eines Signals zum Nachweis eines ungewöhnlichen Zustands von einem Sensorabschnitt (44), der einen ungewöhnlichen Zustand nachweist, einen Alarm eines ungewöhnlichen Zustands als eine Verbindungsquelle ausgibt und das Ereignissignal, das einen ungewöhnlichen Zustand angibt, an die andere Alarmvorrichtung (10-2) überträgt und beim Empfang des Ereignissignals, das einen ungewöhnlichen Zustand angibt, von der anderen Alarmvorrichtung (10-2) den Alarm eines ungewöhnlichen Zustands als ein Verbindungsziel ausgibt,
wobei das Ereignissignal (58) einen Übertragungsquellencode (60) umfasst, der einzigartig für eine Übertragungsquellenvorrichtung ist, wobei ein Gruppencode (62) die Verbindung mit einer verbundenen Gruppe und ein Ereigniscode (64) den Ereignisinhalt angibt;
einen Abschnitt zur Verwaltung einer verbundenen Meldung (72),der, in einer Speichertabelle (66), Meldungsinformationen registriert und verwaltet, die mit der Alarmvorrichtung (10-1) und mit eine anderen Alarmvorrichtung (10-2) assoziiert sind, Meldungsinformationen, die mit der anderen Vorrichtung (26), verschieden von den Alarmvorrichtungen, assoziiert sind, und Kennzeichnungsinformationen, die für jede der Meldungsinformationen einstellen, ob eine Audioausgabe durchgeführt werden soll oder nicht, wobei auf die Speichertabelle (66) gemäß dem Ereigniscode (64) Bezug genommen wird und
einen Abschnitt zur Verarbeitung von verbundenen Meldungen (74), der nach dem Empfang des Ereignissignals (58) von der anderen Vorrichtung (26), verschieden von den Alarmvorrichtungen, ausgelegt ist, um auf die Speichertabelle (66) basierend auf dem Ereigniscode, der in dem Ereignissignal enthalten ist, Bezug zu nehmen, und, wenn die Meldungsinformationen eingestellt sind, eine Audioausgabe zu ermöglichen, um die assoziierten Meldungsinformationen von der Speichertabelle (66) wiederzugewinnen und eine Audioausgabe davon durchzuführen.

2. Alarmvorrichtung (10-1) nach Anspruch 1, wobei
die andere Vorrichtung eines oder mehrere einer Sprechanlage (26), eines Einbruchalarmempfängers (30), eines Telefons (32), einer Uhr (35) und eines Haushaltsgeräts umfasst, und wobei das Vorrichtungs-spezifische Ereignissignal (58), das von einem Kommunikationsadapter (36) übertragen wird, der in der anderen Vorrichtung bereitgestellt ist, von dem Abschnitt zur Verarbeitung der verbundenen Meldung (74) empfangen und verarbeitet wird.

3. Alarmsystem, umfassend:
eine Vielzahl von Alarmvorrichtungen (10) nach einem der vorhergehenden Ansprüche, das beim Nachweis eines ungewöhnlichen Zustands ein Ereignissignal (58) überträgt, das den ungewöhnlichen Zustand einer anderen Alarmvorrichtung anzeigt, um die Ausgabe eines verbundenen Alarms durchzuführen,
einen Kommunikationsadapter (36), der auf einer anderen Vorrichtung (26), verschieden von den Alarmvorrichtungen, bereitgestellt ist, der ein Ereignissignal (58) überträgt, das einzigartig für die andere Vorrichtung ist, wobei der Kommunikationsadapter (36) Folgendes umfasst:
einen Kommunikationssteuerabschnitt (75), der eine Ereignisaktivität in der anderen Vorrichtung (26) feststellt und das Vorrichtungs-spezifische Ereignissignal (58) erzeugt; und
einen drahtlosen Schaltungsabschnitt (78), der das Ereignissignal (58) mit der Alarmvorrichtung (10) austauscht.

4. Alarmsystem nach Anspruch 3, wobei
die andere Vorrichtung, verschieden von den Alarmvorrichtungen, eines oder mehrere einer Sprechanlage (26), eines Einbruchalarmempfängers (30), eines Telefons (32),einer Uhr (35) und eines Haushaltsgeräts umfasst, und wobei das Vorrichtungs-spezifische Ereignissignal (58), das vom Kommunikationsadapter (36) übertragen wird, der in der anderen Vorrichtung (26) bereitgestellt ist, vom Abschnitt zur Verarbeitung der verbundenen Meldung (74) empfangen und verarbeitet wird.

## Revendications

1. Dispositif d'alarme (10-1), comprenant :
une section de circuit sans fil (40) qui échange par voie hertzienne des signaux d'événement (58) avec un autre dispositif d'alarme (10-2) et qui reçoit des signaux d'événement (58) en provenance d'un autre dispositif (26) distinct des dispositifs d'alarme ;
une section d'alerte (46) qui génère en sortie une alarme d'état anormal ;
une section d'exploitation (48) qui teste le dispositif d'alarme ou interrompt l'alarme d'état anormal ;
une section de surveillance d'état anormal (70) qui, suite à la réception d'un signal de détection d'état anormal en provenance d'une section de capteur (44) qui détecte un état anormal, génère en sortie ladite alarme d'état anormal sous la forme d'une source de liaison et transmet ledit signal d'événement indiquant un état anormal audit autre dispositif d'alarme (10-2), et suite à la réception dudit signal d'événement indiquant un état anormal en provenance dudit autre dispositif d'alarme (10-2), génère en sortie ladite alarme d'état anormal sous la forme d'une destination de liaison ;
ledit signal d'événement (58) inclut un code source de transmission (60) qui est unique pour un dispositif source de transmission, un code de groupe (62) indiquant une association à un groupe lié, et un code d'événement (64) indiquant des contenus d'événement ;
une section de gestion de messages liés (72) qui enregistre et gère, dans une table de mémoire (66), des informations de message associées audit dispositif d'alarme (10-1) et à un autre dispositif d'alarme (10-2), des informations de message associées audit autre dispositif (26) distinct des dispositifs d'alarme, et des informations de fanion qui définissent, pour chacune desdites informations de message, si une sortie audio doit être mise en oeuvre ou non, où il est fait référence à ladite table de mémoire (66) selon ledit code d'événement (64) ; et
une section de traitement de messages liés (74) qui, suite à la réception dudit signal d'événement (58) en provenance dudit autre dispositif (26) distinct des dispositifs d'alarme, est apte à faire référence à ladite table de mémoire (66), sur la base dudit code d'événement inclus dans ledit signal d'événement, et si lesdites informations de fanion sont définies de manière à activer la sortie audio, à extraire lesdites informations de message associées de ladite table de mémoire (66) et à mettre en oeuvre la sortie audio connexe.

2. Dispositif d'alarme (10-1) selon la revendication 1, dans lequel :
ledit autre dispositif inclut un ou plusieurs éléments parmi un interphone (26), un récepteur d'alarme antivol (30), un téléphone (32), une horloge (35), et un appareil électroménager, et ledit signal d'événement spécifique au dispositif (58) transmis à partir d'un adaptateur de communication (36) délivré dans ledit autre dispositif est reçu et traité par ladite section de traitement de messages liés (74).

3. Système d'alarme, comprenant :
une pluralité de dispositifs d'alarme (10) selon l'une quelconque des revendications précédentes, lesquels, lors de la détection d'un état anormal, transmettent un signal d'événement (58) indiquant l'état anormal à un autre dispositif d'alarme, en vue de mettre en oeuvre une sortie d'alarme liée ; et
un adaptateur de communication (36) délivré sur un autre dispositif (26) distinct des dispositifs d'alarme, lequel transmet un signal d'événement (58) unique pour ledit autre dispositif, dans lequel ledit adaptateur de communication (36) comprend :
une section de commande de communication (75) qui détecte une activité d'événement dans ledit autre dispositif (26) et génère le signal d'événement spécifique au dispositif (58) ; et
une section de circuit sans fil (78) qui échange ledit signal d'événement (58) avec ledit dispositif d'alarme (10).

4. Système d'alarme selon la revendication 3, dans lequel :
ledit autre dispositif distinct des dispositifs d'alarme comprend un ou plusieurs éléments parmi un interphone (26), un récepteur d'alarme antivol (30), un téléphone (32), une horloge (35), et un appareil électroménager, et ledit signal d'événement spécifique au dispositif (58), transmis à partir de l'adaptateur de communication (36) délivré dans ledit autre dispositif (26), est reçu et traité par ladite section de traitement de messages liés (74).
